# EUROPÄISCHE PATENTANMELDUNG

(11) **EP 2 826 693 A2**
(43) Veröffentlichungstag der Anmeldung: **21.01.2015**
(21) Anmeldenummer: 14175107.3
(22) Anmeldetag: 30.06.2014
(51) Int. Cl.: B62B 3/00, B62B 5/00, B62B 5/04

(54) **Transportwagen**

(30) Priorität: 18.07.2013 CH 12822013
(71) Anmelder: Schweizerische Bundesbahnen SBB, 3000 Bern (CH)
(72) Erfinder: Schneller, Reto, 7017 Flims (CH); Evertz, Jörg, 8903 Birmensdorf (CH); Irányi, Daniel, 6312 Steinhausen (CH); Lenzi, Arno, 8003 Zürich (CH); Spörri, Robert, 8057 Zürich (CH); Eggert, Dominik, 8046 Zürich (CH); Spinelli, Nico, 8037 Zürich (CH)
(74) Vertreter: Rutz & Partner

(57) **Zusammenfassung**

Der Transportwagen (1) umfasst ein Fahrwerk (10), das ein Chassis (23) mit einer Längsachse (L) und einer dazu senkrecht verlaufenden Querachse (Q) aufweist, sowie eine auf dem Fahrwerk (10) angeordnete Tragstruktur (100), die der Aufnahme und dem Halten von zu transportierenden Gegenständen dient. Vorzugsweise ist der Transportwagen (1) mit einer der Steuerung des Fahrwerks (10) dienenden Bedienvorrichtung (50,60) und/oder einer Bremseinrichtung (52) versehen. Erfindungsgemäss umfasst das Chassis (23) ein vorderes Chassisteil (2), das wenigstens ein vorderes Rad oder zwei vordere Räder (21,21') eines vorderen Räderpaars je um deren Hochachse drehbar hält und das durch wenigstens ein Gelenk (38,38') mit einem als Wippe ausgebildeten hinteren Chassisteil (3) verbunden ist, das wenigstens ein hinteres Rad (31,31') oder zwei hintere Räder (31,31') eines hinteren Räderpaars je um deren Hochachse drehbar hält, und das zwischen den vorderen Rädern (21,21') und den hinteren Rädern (31,31') wenigstens ein mittleres Rad (32, 32'), vorzugsweise ein mittleres Räderpaar, je um deren Hochachse drehfest hält.

## Beschreibung

Die vorliegende Erfindung betrifft einen Transportwagen nach dem Oberbegriff von Anspruch 1.

Transportwagen werden eingesetzt, um Gegenstände, insbesondere zwischen Transportintervallen zu verkaufende Produkte, zu transportieren. So werden Transportwagen in grösseren Transportmitteln, wie Schienenfahrzeugen, Schiffen oder Flugzeugen eingesetzt, um Waren den in den Transportmitteln befindlichen Passagieren beispielsweise an ihren Sitzplätze anzubieten. Neben der Möglichkeit der Aufnahme und Präsentation der Waren werden je nach Einsatzgebiet unterschiedliche Anforderungen an die Transportwagen in Bezug auf Gewicht, Grösse, Manövrierbarkeit und Bedienbarkeit gestellt.

Entlang den Transportwegen innerhalb dieser Transportmittel bestehen normalerweise beengte Raumverhältnisse, so dass die Transportwagen oft mehrfach vor und zurück gefahren werden müssen, bevor sie in eine gewünschte Richtung weiter verschoben werden können

Es ist zu beachten, dass Transportwagen bei der Verschiebung innerhalb des Transportmittels oder gegebenenfalls auch auf dem Weg hin zum Transportmittel oft auf unebenen Unterlagen fahren müssen, so dass die mitgeführten Esswaren und Getränke während der Fahrt oft unerwünschten Erschütterungen ausgesetzt sind.

Ferner ist zu beachten, dass die Transportmittel sich nur selten mit konstanter Geschwindigkeit in einer Richtung bewegen, sondern dass regelmässig positive und negative Beschleunigungen in Fahrtrichtung und auch seitlich dazu auftreten, weshalb die Transportwagen bei diesen Ereignissen von den Bedienpersonen mit entsprechendem Kraftaufwand gehalten werden müssen.

Weiter ist zu beachten, dass Transportwagen robust aufgebaut sein müssen und deshalb typischerweise sehr schwer sind und eine Gefahrenquelle bilden, wenn sie ausser Kontrolle geraten.

Aufgrund des robusten Aufbaus der Transportwagen resultiert oft eine Tragstruktur für den Transportwagen, in der die Produkte nicht optimal gelagert werden können. Einerseits ist oft ungenügend Speicherplatz vorhanden. Andererseits sind die für den Verkauf vorgesehenen Produkte oft wenig vorteilhaft positioniert, so dass nicht schnell auf diese zugegriffen werden kann und diese auch nicht optimal präsentiert werden, sondern unsichtbar z.B. in schwer bedienbaren Schubladen versorgt sind.

Der vorliegenden Erfindung liegt daher die Aufgabe zugrunde, einen verbesserten Transportwagen zu schaffen.

Insbesondere ist ein Transportwagen zu schaffen, der eine verbesserte Manövrierbarkeit auf engem Raum aufweist. Gleichzeitig soll der Transportwagen mit geringem Kraftaufwand einfach und sicher bedienbar und steuerbar sein.

Insbesondere sollen mit dem Transportwagen Richtungsänderungen mit möglichst geringem Wendekreis einfach und präzise ausführbar sein.

Bei der Einwirkung von Beschleunigungen, insbesondere auch seitlichen Beschleunigungen, die innerhalb des Transportmittels auftreten, in dem der Transportwagen betrieben wird, soll der Transportwagen einen sicheren Stand gewährleisten und weder seitlich noch frontal abkippen. Insbesondere soll der Transportwagen bei Kurvenfahrten und Richtungsänderungen stabil geführt werden.

In vorzugsweisen Ausgestaltungen soll der Transportwagen derart motorisiert werden, dass dieser in einfachster Weise, beispielsweise mittels eines »Control Sticks« gesteuert werden kann.

Auch auf einer unebenen Unterlage soll der Transportwagen mit seinen Rädern in optimalem Kontakt mit dieser verbleiben, so dass Sprünge und Schläge vermieden werden. Einwirkungen durch eine manuell oder elektrisch betätigbare Steuervorrichtung über eine Beschleunigungsvorrichtung, eine Antriebsvorrichtung oder eine Bremseinrichtung, auf das Fahrwerk sollen optimal auf die Unterlage übertragen werden, so dass der Transportwagen auch stets präzise steuerbar ist und Unfallrisiken vermieden werden.

Selbst bei einer unebenen Unterlage soll der Transportwagen spurtreu verschoben werden können, so dass Kollisionen, beispielsweise Kollisionen mit Sitzanordnungen im Transportmittel problemlos vermieden werden können.

Der Transportwagen soll ferner derart aufgebaut sein, dass der potenziell zur Verfügung stehende Raum optimal genutzt wird und die Gegenstände und Waren derart geordnet gelagert werden können, dass in einfacher Weise auf diese zugegriffen werden kann. Die Produkte sollen ferner derart gelagert werden können, dass sie Käufern vorteilhaft präsentiert werden. Der Transportwagen soll einfach beladbar und wieder entladbar sein.

Weiterhin soll der Transportwagen derart aufgebaut sein, dass Vorrichtungen, wie Behälter, Maschinen und eine Energieversorgungsvorrichtung, vorteilhaft in den Transportwagen integriert und mit elektrischen oder mechanischen Versorgungsleitungen verbunden werden können.

Der Transportwagen soll ferner derart strukturiert sein, dass das vorteilhafte Fahrverhalten und die vorteilhafte Stabilität weiter unterstützt werden.

Diese Aufgabe wird erfindungsgemäss durch einen Transportwagen mit den Merkmalen nach Anspruch 1 gelöst. Vorteilhafte Ausgestaltungen der Erfindung sind in den abhängigen Ansprüchen angegeben.

Der Transportwagen umfasst ein Fahrwerk, das ein Chassis mit einer Längsachse und einer dazu senkrecht verlaufenden Querachse aufweist, sowie eine auf dem Fahrwerk angeordnete Tragstruktur, die der Aufnahme und dem Halten von zu transportierenden Gegenständen dient.

Erfindungsgemäss umfasst das Chassis ein vorderes Chassisteil, das wenigstens ein vorderes Rad oder zwei vordere Räder eines vorderen Räderpaars je um deren Hochachse drehbar hält und das durch wenigstens ein Gelenk mit einem als Wippe ausgebildeten hinteren Chassisteil verbunden ist, das wenigstens ein hinteres Rad oder zwei hintere Räder eines hinteren Räderpaars je um deren Hochachse drehbar hält, und das zwischen den vorderen Rädern und den hinteren Rädern wenigstens ein mittleres Rad, vorzugsweise ein mittleres Räderpaar, je um deren Hochachse drehfest hält.

Vorzugsweise ist der Transportwagen zudem mit einer der Steuerung des Fahrwerks dienenden Bedienvorrichtung und/oder einer Bremseinrichtung versehen.

Die Räder des vorderen und des hinteren Räderpaars sind somit unabhängig voneinander um deren Hochachse, d.h. um eine Achse senkrecht zur Längsachse und Querachse des Fahrwerks drehbar gelagert. Für Richtungsänderungen können diese Räder daher ausgeschwenkt werden. Die beiden Räder des mittleren Räderpaars sind hingegen um deren Hochachse nicht schwenkbar und mit ihren vorzugsweise koaxialen Laufachsen typischerweise parallel zur Querachse des Fahrwerks ausgerichtet.

Das hintere Chassisteil ist vorzugsweise das der Bedienperson bzw. der Bedienvorrichtung zugewandte oder proxymale Chassisteil, während das vordere Chassisteil das von der Bedienperson entfernte oder distale Chassisteil ist.

Die Drehbarkeit des Transportwagens wird auch bei hoher Zuladung und damit hoher Belastung aller Räder gewährleistet. Die schwenkbaren vorderen und hinteren Räder und insbesondere die um die Hochachse nicht schwenkbaren mittleren Räder ermöglichen eine Drehung des Transportwagens um dessen Hochachse praktisch an Ort. Da die Räder des mittleren Räderpaars nicht ausgelenkt werden müssen, wird der Transportwagen seitlich stets stabil gehalten und gestützt. Zudem reduziert sich der Kraftaufwand, da nur die äusseren Räder ausgelenkt werden müssen, auf die jedoch nur eine Teillast des Transportwagens einwirkt. Grundsätzlich ist es dann möglich vorn und/oder hinten nur ein schwenkbares Rad vorzusehen.

Vorzugsweise sind die Räder des mittleren Räderpaars unabhängig voneinander um ihre Laufachsen drehbar gelagert, so dass Sie bei einer Drehung des Transportwagens um dessen Hochachse in unterschiedlichen Laufrichtungen drehen können.

Sofern das mittlere Räderpaar im Bereich des Zentrums des Chassis angeordnet ist, so kann der Transportwagen um seine zentrale Hochachse gedreht werden, was eine optimale Manövrierbarkeit bei kleinstem Raumbedarf erlaubt.

Durch das als Wippe ausgebildete hintere Chassisteil wird erreicht, dass alle Räder den Kontakt zum Boden nie verlieren, sondern sich dem Bodenverlauf anpassen, auch wenn dieser nicht durchwegs horizontal verläuft. Damit kann der Transportwagen auch problemlos auf unebenen Fahrbahnen, insbesondere über Knickstellen gefahren werden, ohne dass der Bodenkontakt der mittleren Räder aufgehoben wird. Ein unebener Bodenverlauf ist beispielsweise häufig beim Einsatz in Bahnwagen anzutreffen, welche mit unterschiedlichen Niveaus der zu befahrenden Gänge ausgestattet sind und beim Übergang von Wagen zu Wagen gegebenenfalls Rampen aufweisen.

Vorzugsweise ist hintere Chassisteil bzw. die Wippe als Rahmen ausgebildet und um eine Achse quer zur Längsachse des Chassis gelenkig angeordnet. Eine derart ausgebildete Wippe bildet einen stabilen und gut geführten Teil des Fahrwerks, weshalb das Fahrwerk des Transportwagens insgesamt optimale Laufeigenschaften erhält.

In einer prinzipiellen Ausgestaltung bildet das hintere Chassisteil eine einheitliche Wippe. Sofern mit grösseren Bodenunebenheiten zu rechnen ist, kann das hintere Chassisteil auch vorteilhaft mit zwei gegeneinander drehbaren Wippenteilen versehen werden; mit einem ersten Wippenteil, welches die ersten Räder des hinteren Räderpaars und des mittleren Räderpaars hält, und mit einem zweiten Wippenteil, welches die zweiten Räder des hinteren Räderpaars und des mittleren Räderpaars hält. Die beiden Wippenteile können unabhängig einander den Bodenunebenheiten folgen, wodurch die Laufeigenschaften und die Stabilität des Transportwagens weiter verbessert werden.

Vorzugsweise sind das vordere Chassisteil und das hintere Chassisteil bis zu einem ersten und einem zweiten Endanschlag gegeneinander drehbar, an denen je wenigstens ein Dämpfungselement vorgesehen ist, welches den Aufschlag dämpft.

Vorteilhaft können das vordere Chassisteil und das hintere Chassisteil durch ein Dämpfungselement, wie einen pneumatischen oder hydraulischen Dämpfer, miteinander verbunden werden, so dass Schwingungen der Wippe vermieden werden. Ein entsprechendes Dämpfungselement kann vorteilhaft auch in die Lagerung oder die Lagergelenke integriert werden, durch die die beiden Chassisteile miteinander verbunden sind.

Zur Schonung der mit dem Transportwagen transportierten Waren oder Geräte ist vorzugsweise wenigstens ein Teil der Räder oder Räderpaare mit einer in Vertikalrichtung wirkenden Federung mit dem Chassis verbunden.

In einer vorzugsweisen Ausgestaltung ist die Tragstruktur durch elastische Elemente mit dem Fahrwerk verbunden, so dass Erschütterungen des Fahrwerks nur stark gedämpft auf die Tragstruktur übertragen werden.

Die Räder des Transportwagens sind vorzugsweise als in der Querachse des Chassis beabstandete Räderpaare ausgebildet, wobei die Spurweiten der Räderpaare vorzugsweise annähernd der Breite des Chassis entsprechen, und damit ein vorderes, mittleres und hinteres Räderpaar bilden. Durch die breite Spur wird eine gute Spurhaltung und damit gutes Fahrverhalten sowie in Bezug auf die Längsachse des Transportwagens eine hohe Kippstabilität gewährleistet. Damit wird auch eine hohe Ladekapazität in Bezug auf das Gewicht für die zu transportierenden Gegenstände erreicht.

In einer weiteren Ausführungsform ist die Bremseinrichtung als in der Ruhestellung blockierende Bremseinrichtung ausgebildet, welche vorzugsweise durch ein um eine Achse drehbar angeordnete Betätigungsvorrichtung deaktivierbar ist, vorzugsweise durch Drehung in beide Drehrichtungen deaktivierbar ist. Damit wird erreicht, dass der Transportwagen in der Ruhestellung gebremst ist und sich damit nicht selbständig und ungewollt in Bewegung setzen kann. Dies ist wichtig beim Einsatz in Fahrzeugen, welche ständig wechselnden Beschleunigungskräften durch Anfahren, Bremsen und Kurvenfahrten ausgesetzt sind.

In einer weiteren Ausführungsform ist mindestens ein Rad oder Räderpaar mit der Bremseinrichtung wirkverbunden, vorzugsweise ein mittleres Rad oder das mittlere Räderpaar. Damit kann der Transportwagen zuverlässig gebremst oder blockiert werden, da die gebremsten Räder des mittleren Räderpaars stets Bodenkontakt haben. Die mittleren Räder eignen sich daher optimal für die Ankopplung einer Beschleunigungsvorrichtung, einer Bremseinrichtung oder einer Antriebsvorrichtung.

Die Räder des mittleren Räderpaars können daher vorteilhaft nicht nur zum Abbremsen, sondern auch zum Beschleunigen der Transportvorrichtung verwendet und dazu von einer einheitlichen Antriebseinheit oder von zwei Antriebseinheiten angetrieben werden, die den Antrieb des Transportwagens vollständig übernehmen oder zumindest die Bedienperson entlasten, so dass diese weniger Kraft aufwenden muss.

Vorzugsweise werden die Räder des mittleren Räderpaars individuell angetrieben, so dass diese mit unterschiedlichen Geschwindigkeiten in dieselbe Drehrichtung oder in entgegengesetzte Drehrichtungen angetrieben werden können. Auf diese Weise kann durch motorischen Antrieb wiederum eine Drehung des Transportwagens um dessen vorzugsweise zentrale Hochachse an Ort vollzogen werden. Die Antriebsvorrichtungen können zudem vorteilhaft auch zum Abbremsen des Transportwagens verwendet werden.

Der erfindungsgemässe Transportwagen kann einfach ausgestaltet sein und ein Fahrwerk ohne Steuervorrichtung und ohne Bremsvorrichtung aufweisen. Vorzugsweise ist jedoch eine Bedienvorrichtung vorgesehen, welche es erlaubt, den Transportwagen mechanisch oder elektrisch zu steuern und zu lenken. Vorzugsweise ist auch eine Bremsvorrichtung vorgesehen, welche es erlaubt, die Räder zu bremsen oder zu blockieren.

Die Steuerung der Antriebsvorrichtungen und somit des Transportwagens kann vorteilhaft mittels einer elektrischen Steuereinheit erfolgen, die entsprechend elektrische Steuersignale drahtlos oder drahtgebunden zu den Antriebseinheiten überträgt. Diese Steuersignale können beispielsweise mittels eines einfachen »Control Stick« erzeugt werden.

In einer weiteren Ausführungsform ist eine Betätigungsvorrichtung für eine Bremseinrichtung in die Bedienvorrichtung integriert ausgebildet, vorzugsweise in Form einer drehbar angeordneten Hülse oder Griffstange. In der Ausführung des Transportwagens als Handwagen kann die Bedienvorrichtung aus einer einfachen Stange bestehen, welche in geeigneter Höhe angeordnet mit dem Chassis verbunden ist. Die Betätigungsvorrichtung für die Bremseinrichtung, d.h. zum Lösen der Bremse und damit Erstellen der Fahrbereitschaft des Transportwagens kann einfach im Bereich oder an der Bedienvorrichtung angeordnet sein. Mittels der Griffstange kann der Transportwagen somit gestossen und gezogen und wahlweise abgebremst werden.

Die auf dem Laufwerk ruhende Tragstruktur des Transportwagens umfasst vorzugsweise mehrere Rippen, die aus flächigen Elementen gebildet sind. Die Rippen verlaufen ausgehend von einem zentralen Bereich der Tragstruktur, beispielsweise ausgehend von einer zentral angeordneten und vertikal ausgerichteten Stütze, nach aussen. Die symmetrisch oder asymmetrisch ausgestaltete Tragstruktur kann in der Aufsicht auf das Chassis T-förmig oder X-förmig angeordnete Rippen aufweisen. Auf den Rippen oder der Stütze ist eine annähernd parallel zum Chassis verlaufende Stellplatte angeordnet, auf der weitere waren oder Geräte abgestellt werden können.

Damit wird der Schwerpunkt der für die Lagerung von Gegenständen dienenden Tragstruktur in das Zentrum des Transportwagens verlegt, wodurch wesentliche Vorteile resultieren. Einerseits wird eine rundherum sichtbare Präsentation der mit dem Transportwagen transportierten Waren ermöglicht. Andererseits ergibt sich ein einfacher Zugriff auf die Waren da keine äusseren Tragelemente und Rahmen den Zugriff behindern. Ferner ist zu beachten, dass die Verlagerung der Strukturteile in das Zentrum des Transportwagens hinsichtlich der Gewichtsverteilung besonders vorteilhaft ist. Insbesondere bei Kurvenfahrten reduziert sich die Kippneigung des Transportwagens.

Durch die vertikal ausgerichteten Rippen kann die Tragstruktur vorteilhaft in mehrere Tragbereiche unterteilt werden, in die Haltevorrichtungen, wie Regale, Warenkörbe und Flüssigkeitsbehälter, oder Maschinen, wie Kühlvorrichtungen, Heizvorrichtungen und Getränkemaschinen, einsetzbar sind. In den flächigen Rippen können vorteilhaft Öffnungen zur Aufnahme von Halterungen von Körben oder Ablageflächen angebracht werden, um auf diesen die Waren optimal zu präsentieren.

Die vorzugsweise vorgesehene zentrale Stütze weist vorzugsweise einen innerhalb der Stütze verlaufenden Kanal auf, der vom Chassis vorzugsweise bis zum oberen Ende der Tragstruktur verläuft. Innerhalb dieses Kanals können beispielsweise Stromverbindungen und Ablaufkanäle für Flüssigkeiten angeordnet werden, die beispielsweise von der Stellplatte bzw. der Oberseite der Stellvorrichtung in den unteren Bereich des Chassis verlaufen. Damit können beispielsweise auf der Stellplatte angeordnete elektrische Geräte, beispielsweise Kaffeemaschinen, mit Strom versorgt werden. Ferner können Flüssigkeiten vorteilhaft in einen innerhalb des Laufwerks angeordneten Behälter transferiert werden. Die Stütze erfüllt daher eine Mehrfachfunktion.

In einer weiteren Ausführungsform ist im Chassis eine Energieversorgungseinrichtung angeordnet, die elektrische Geräte, wie eine Kaffeemaschine oder die Antriebsvorrichtungen autonom mit Strom versorgen kann. Beispielsweise umfasst die Energieversorgungseinrichtung aufladbare Akkumulatoren.

In einer weiteren Ausführungsform umfasst die Tragstruktur beweglich angeordnete Abdeckungselemente, mit denen wenigstens ein Teil der Tragstruktur abgeschlossen oder abgedeckt werden kann. Damit können Waren geschützt vor Einblick oder Zugriff transportiert werden. Die Abdeckungselemente können beispielsweise Türen, Fenster, fest angeordnete Abdeckbleche oder vorzugsweise transparente Platten sein, die entlang der Aussenseite der Tragstruktur verschiebbar sind.

In einer weiteren Ausführungsform sind im Bereich des Chassis in Längsachse des Chassis optische Signale aussendende Richtungsweiser angeordnet, vorzugsweise Laserlichtsender. Durch diese Signale kann der Fahrweg des Transportwagens optisch angezeigt werden und sowohl der Bedienperson des Transportwagens wie anderen Leuten anzeigen, wie der künftige Weg des Transportwagens verlaufen wird. So kann beispielsweise erkannt werden, ob ein im Bereich des Fahrweges liegendes Hindernis umfahren werden kann oder nicht. Der Laserlichtsender kann beispielsweise einen Lichtfächer aussenden, damit am Boden nicht nur ein Punkt sondern ein Weg angezeigt werden kann. Ein solcher Lichtsender wird vorteilhaft im unteren Bereich des Chassis oder am Fahrwerk angebracht, damit die Lichtstrahlen keine störenden Wirkungen auf neben dem Fahrweg des Transportwagens befindliche Personen oder am Boden liegende Tiere haben.

In vorzugsweisen Ausgestaltungen werden mit optischen Signalen weitere Informationen direkt auf den Boden projiziert. Beispielsweise werden Spezialangebote oder eine Verkaufsliste abgebildet.

Ausführungsbeispiele der vorliegenden Erfindung werden nachstehend anhand von Figuren näher erläutert. Es zeigen:
- Fig. 1: eine perspektivische Ansicht eines erfindungsgemässen Transportwagens 1, der eine auf ein Fahrwerk 10 abgestützte Tragstruktur 100 aufweist;
- Fig. 2: eine Seitenansicht des Transportwagens 1 von Fig. 1;
- Fig. 3a: eine perspektivische Ansicht des Fahrwerks 10 des Transportwagens von Fig. 1, welches ein Chassis 23 mit einem vorderen Chassisteil 2 umfasst, das ein vorderes Räderpaar 21, 21' aufweist und das durch Gelenke 38, 38' mit einem als Wippe ausgebildeten hinteren Chassisteil 3 verbunden ist, das ein hinteres und ein mittleres Räderpaar 31, 31'; 32, 32' aufweist;
- Fig. 3b: eine perspektivische Ansicht des Fahrwerks 10 von von Fig. 3a mit Querstreben 25, 26, 27 und Auslegern 271, 271', die mit dem vorderen Chassisteil 2 verbunden sind;
- Fig. 4a: eine Seitenansicht des Fahrwerks 10 von Fig. 3a mit dem waagrecht ausgerichteten hinteren Chassisteil 3;
- Fig. 4b: eine Seitenansicht des Fahrwerks 10 von Fig. 4a mit dem hinteren Chassisteil 3, das frontseitig nach oben bis zu einem Endanschlag gegen das vordere Chassisteil 2 gedreht ist;
- Fig. 4c: eine Seitenansicht des Fahrwerks 10 von Fig. 4a mit dem hinteren Chassisteil 3, das rückseitig nach oben bis zu einem Endanschlag gegen die rückwärts gewandten Ausleger 271, 271' des vorderen Chassisteils 2 gedreht ist;
- Fig. 5a: das Fahrwerk 10 von Fig. 3b mit Bremseinrichtungen 52 an den Rädern 32, 32' des mittleren Radsatzes, die über Bremsleitungen 53, 53' mit einer Bedienvorrichtung 50 in der Ausgestaltung einer Griffstange verbunden sind, die um Ihre Längsachse drehbar und mittels einer Arretiervorrichtung 54 arretierbar ist;
- Fig. 5b: eine der Bremseinrichtungen 52 von Fig. 5a, die einen von der Bremsleitung 53 betätigbaren Bremshebel 521 umfasst, der ein zahnförmiges Arretierelement 5211 aufweist, das in ein Zahnrad 522 eingreift, welches mit dem mittleren Rad 32 verbunden ist;
- Fig. 5c: die Bremseinrichtung 52 von Fig. 5b mit dem aus dem Zahnrad 522 gelösten Arretierelement 5211;
- Fig. 6: die Seitenansicht des Transportwagens 1 von Fig. 2 mit einer der Abgabe von Lichtstrahlen 71 dienenden Richtungsanzeige 7;
- Fig. 7a: die Unterseite des entlang der Längsachse L fahrenden Transportwagens 1 von Fig. 2 mit den Radachsen 210, 210'; 310, 310'; 320, 320' aller Räder 21, 21', 31, 31', 32, 32' parallel zueinander und parallel zur Querachse Q des Laufwerks 10 ausgerichtet;
- Fig. 7b: die Unterseite des sich um einen Wendepunkt W drehenden Transportwagens 1 von Fig. 2 mit den Radachsen 210, 210'; 310, 310'; 320, 320', aller Räder 21, 21', 31, 31', 32, 32' radial zum Wendepunkt W und den Radachsen 320, 320' der Räder 32, 32' des mittleren Räderpaars parallel zur Querachse Q des Laufwerks 10 ausgerichtet;
- Fig. 8a: die Unterseite Transportwagens 1 in einer vorzugsweisen Ausgestaltung mit einer mit den Rädern 32, 32' des mittleren Räderpaars gekoppelten Antriebsvorrichtung 6, die von einer Energieversorgungsvorrichtung 600 gespeist wird und mittels einer symbolisch gezeigten Steuereinheit 60 steuerbar ist;
- Fig. 8b: die Unterseite des Transportwagens 1 von Fig. 8a mit zwei Antriebsvorrichtungen 6, 6', mittels denen die Räder 32, 32' des mittleren Räderpaars individuell angetrieben werden können;
- Fig. 9a: den Transportwagen 1 von Fig. 1 mit der Tragstruktur 100, in die Warenkörbe 911, 923' eingehängt und Behälter 93 und/oder Maschinen 94 eingesetzt sind;
- Fig. 9b: einen Schnitt durch den Transportwagen 1 entlang der in Fig. 9a eingezeichneten Schnittlinie A--A;
- Fig. 9c: einen Schnitt durch den Transportwagen 1 entlang der in Fig. 9a eingezeichneten Schnittlinie B-B;
- Fig. 10a: die Unterseite des Transportwagens von Fig. 7a mit gegeneinander verschobenen mittleren Rädern 32, 32'; und
- Fig. 10b: die Unterseite des Transportwagens von Fig. 7a mit nur einem mittleren Rad 32.

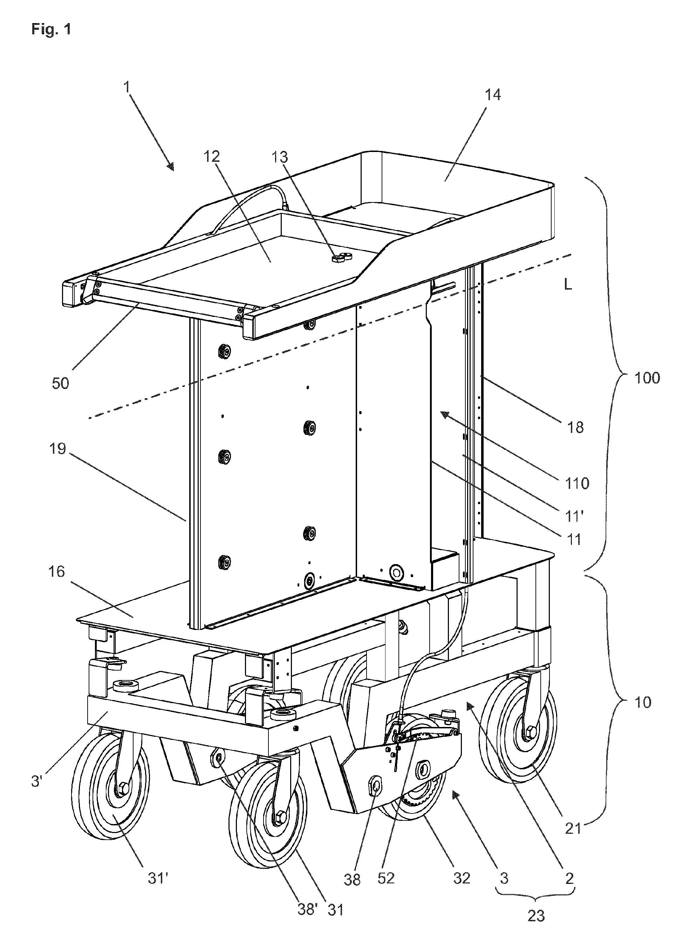

In Fig. 1 zeigt eine perspektivische Ansicht eines erfindungsgemässen Transportwagens 1, der ein Fahrwerk 10 sowie eine darauf aufgesetzte Tragstruktur 100 umfasst.

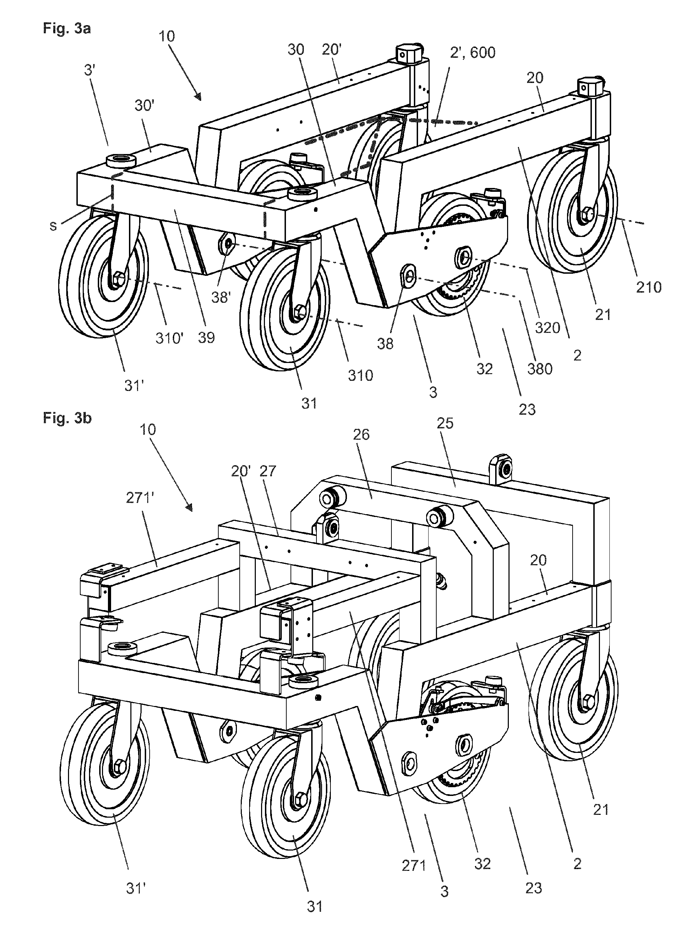

Das in Fig. 3a vereinzelt gezeigte Fahrwerk 10 umfasst ein zweiteiliges Chassis 23, das einen Unterbau des Transportwagens 1 bildet und aus Trägern, vorzugsweise Tragprofilen aus Metall aufgebaut ist.

Das Chassis 23 umfasst ein vorderes Chassisteil 2, das zwei vordere Räder 21, 21' eines vorderen Räderpaars je um deren Hochachse drehbar hält und das durch zwei Gelenke 38, 38' mit einem als Wippe ausgebildeten hinteren Chassisteil 3 verbunden ist, das zwei hintere Räder 31, 31' eines hinteren Räderpaars je um deren Hochachse drehbar hält und das entlang der Längsachse L zwischen den vorderen Rädern 21, 21' und den hinteren Rädern 31, 31' ein mittleres Räderpaar mit mittleren Rädern 32, 32' je um deren Hochachse drehfest hält.

Das hintere Chassisteil 3 bildet eine quer zur Längsachse L des Transportwagens 1 schwenkbar gelagerte Wippe 3, an der das hintere Räderpaar 31, 31' und das mittlere Räderpaar 32, 32' angeordnet ist. Das vordere Räderpaar 21, 21' ist direkt am vorderen Ende des Chassis 23 bzw. am vorderen Ende des vorderen Chassisteils 2 angeordnet.

Das hintere Chassisteil 2 ist als einheitliche Wippe gezeigt, die einen etwa U-förmigen Rahmen mit einem Basisteil 39 und zwei nach vorne gerichtete, etwa Z-förmig und parallel zur Längsachse L verlaufende Chassisarme 30, 30' umfasst, an deren Enden die mittleren Räder 32, 32' des mittleren Räderpaars angeordnet sind. Nahe dem Basisteil 39 sind die beiden hinteren Räder 31, 31' des hinteren Räderpaars um deren Hochachse drehbar befestigt. Dazwischen sind die Chassisarme 30, 30' durch Gelenke 38 bzw. 38' mit sich parallel zur Längsachse L erstreckenden Chassisarmen 20, 20' des vorderen Chassisteils 2 verbunden.

Sofern das der Verbindung der Chassisarme 30, 30' dienende Basisteil 39 des hinteren Chassisteils 3 beispielsweise an den eingezeichneten Schnittlinien s herausgeschnitten wird, resultieren zwei Wippenteile 3, 3' die unabhängig voneinander um das zugehörige Gelenk 38 bzw. 38' drehen und unterschiedliche Unebenheiten des Bodens individuell auffangen können.

Fig. 1 zeigt ferner, dass die mittleren Räder 32, 32' des mittleren Räderpaars mit Bremseinrichtungen 52 versehen sind, die nachstehend näher beschrieben werden.

Das Chassis 23, das nachstehend mit Bezug zu den Figuren 3a und 3b noch näher erläutert wird, weist eine nach oben gerichtete Basisstruktur auf, welche mit der Bodenplatte 16 der Tragstruktur 100 abgeschlossen ist.

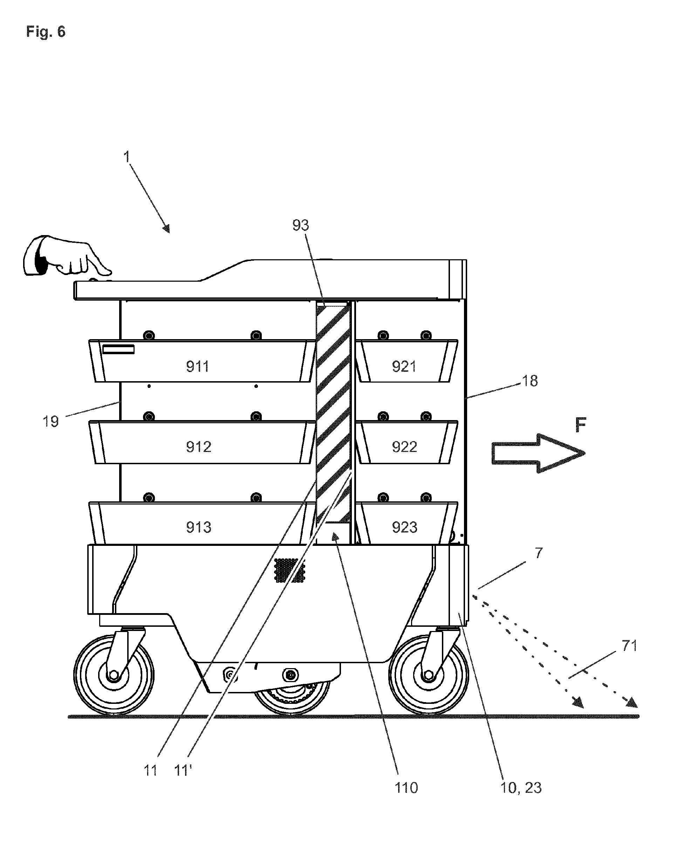

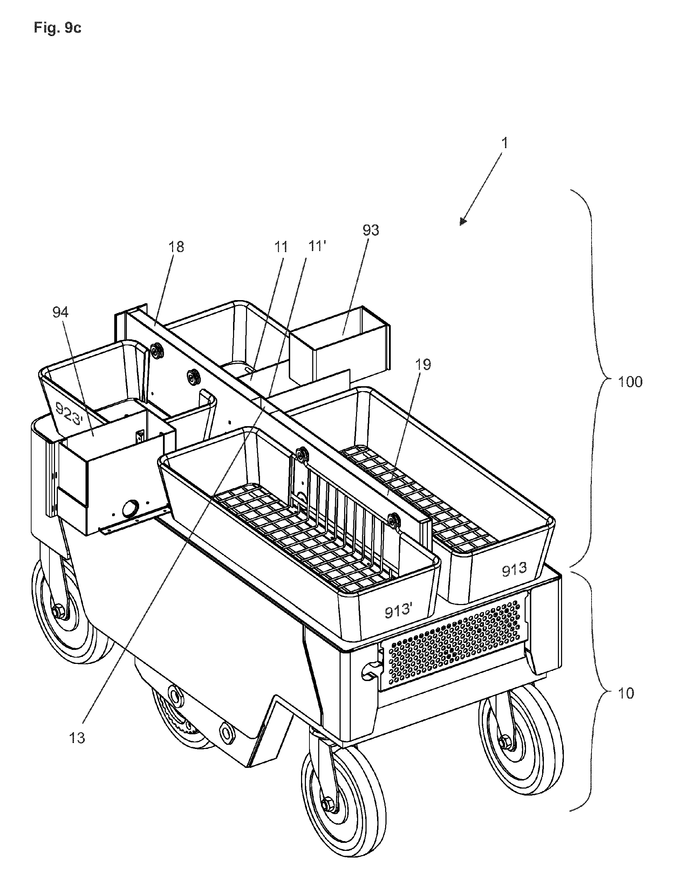

Die Tragstruktur 100 umfasst plattenförmige Längsrippen 18, 19 und plattenförmige Seitenrippen 11, 11', die sich ausgehend von einem zentralen Bereich der Tragstruktur 100 nach aussen erstrecken. Die Rippen 11, 11', 18, 19 bilden daher die Form eines Kreuzes, eines Doppelkreuzes oder eines X. Die beiden Längsrippen 18, 19 verlaufen parallel zur Längsachse L etwa in der Mitte der Tragstruktur 100 und können beispielsweise auch eine einheitliche Platte bilden. Zwischen den beiden senkrecht zu den Längsrippen 18, 19 ausgerichteten Seitenrippen 11, 11' wird ein Zwischenraum 110 gebildet, in den beispielsweise ein Flüssigkeitsbehälter 93 einsetzbar ist (siehe Fig. 6 und Fig. 9c).

Auf die Längsrippen 18, 19 und Seitenrippen 11, 11' ist eine Stellplatte 12 aufgesetzt die von einem annähernd U-förmigen Abschlussrahmen 14 teilweise umschlossen ist, der sich bis zur Bedienvorrichtung 50 erstreckt. Auf die Stellplatte 12 können wahlweise Maschinen und Waren oder auch Kästen aufgesetzt werden.

Innerhalb der Stellplatte 12 ist ferner ein Zugang zu einem Kanal 13 vorgesehen, durch den elektrische oder mechanische Leitungen bzw. Medienleitungen hindurch führbar sind. Medien, wie Energie und Flüssigkeit, können daher einfach durch den Kanal 13 zwischen der Oberseite der Tragstruktur 100 und dem Innenraum des Fahrwerks 10 ausgetauscht werden. Der Kanal 13 kann zwischen den beiden Längsrippen 18, 19 gegebenenfalls in einer Stütze angeordnet sein. Die beiden Längsrippen 18, 19 können auch ein einheitliches Verbundelement bilden, innerhalb dem der Kanal 13 verläuft.

Die hintere Kante des Abschlussrahmens 14 wird durch eine quer verlaufende Griffstange 50 gebildet, mit welcher der Transportwagen 1 gestossen oder gezogen werden kann.

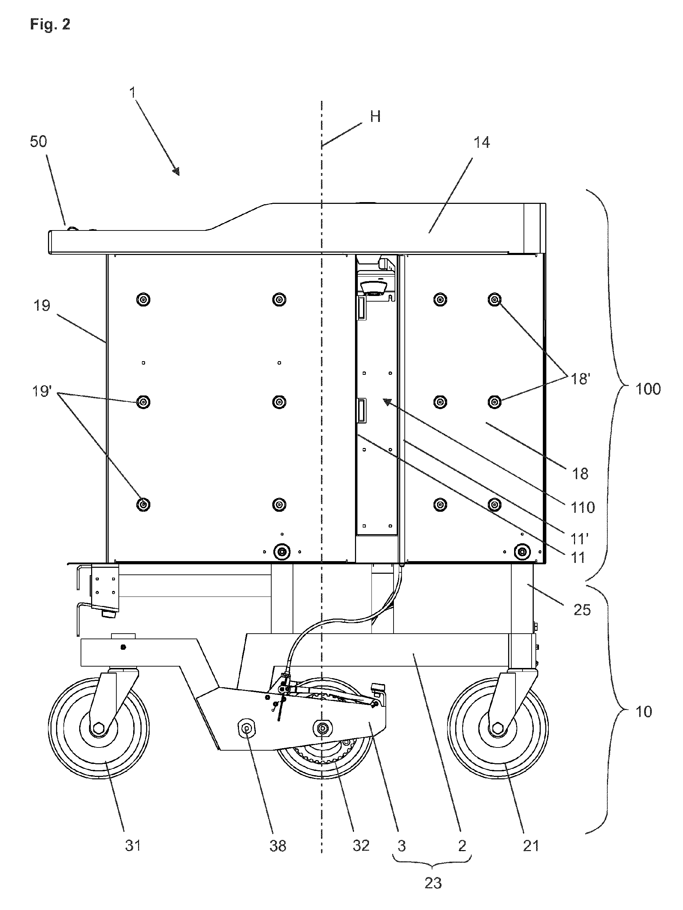

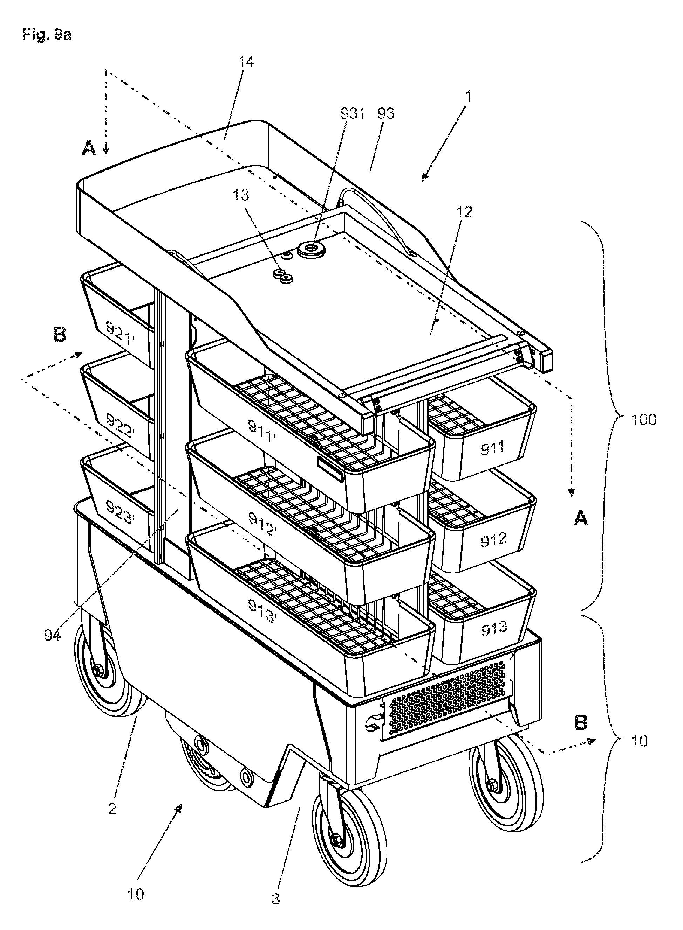

Fig. 2 zeigt den Transportwagen 1 nach Fig. 1 in der Seitenansicht. Dabei sind in den Längsrippen 19 und 18 angeordnete Löcher 19' resp. 18' sichtbar, welche dem Einhängen von Warenkörben (siehe Fig. 9a) dienen. In solchen Warenkörben können Waren gut sichtbar gelagert und transportiert werden.

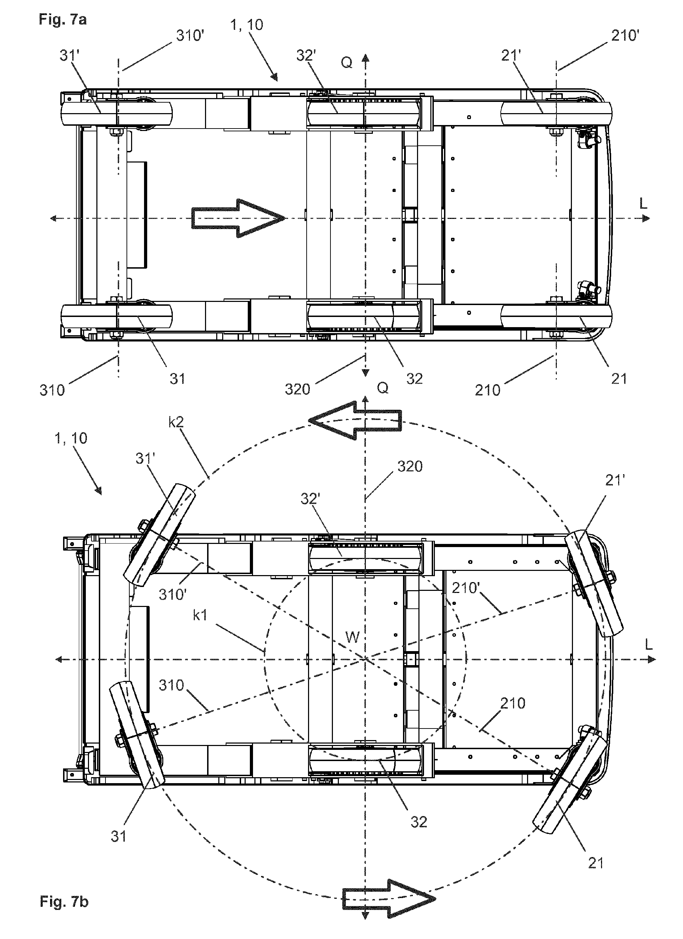

In Fig. 2 ist ferner die zentrale Hochachse H eingezeichnet, um die der Transportwagen 1 an Ort drehbar ist. Die Drehung des Transportwagens 1 um die Hochachse H wird nachstehend mit Bezug auf die Figuren 7a und 7b näher erläutert.

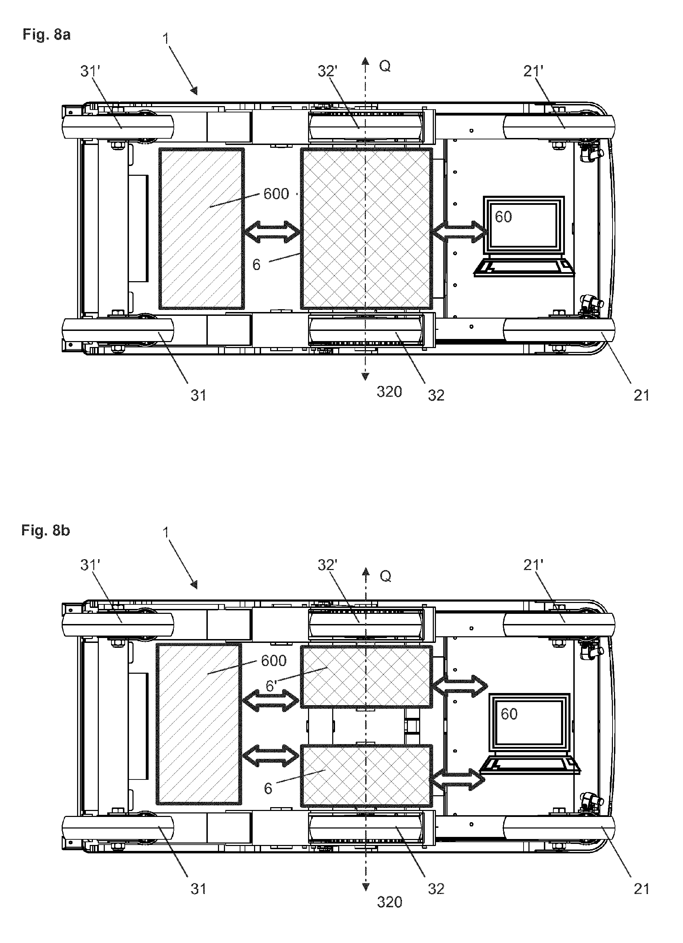

Fig. 3a zeigt die perspektivische Ansicht des unteren Teils des Chassis 23. Das Chassis 23 hält vorzugsweise einen Trog 2', der beispielsweise der Aufnahme einer Energieversorgungseinheit 600 (siehe die Figuren 8a und 8b) oder eines Flüssigkeitstanks (nicht dargestellt) dient. Durch die tiefe Anordnung dieses Trogs 2' wird die Stabilität des ganzen Transportwagens 1 weiter erhöht.

Fig. 3a zeigt die Drehachsen 201, 210' der schwenkbar gehaltenen vorderen Räder 21, 21', die Drehachsen 310, 310' der schwenkbar gehaltenen hinteren Räder 32, 32' sowie die gemeinsame Drehachse 320 der nicht schwenkbaren mittleren Räder 32, 32', die stets parallel zur Querachse des Chassis 23 ausgerichtet ist.

Eingezeichnet ist ferner die parallel zur Querachse des Chassis 23 ausgerichtete Gelenksachse 380 über die das vordere Chassisteil 2 und das hintere Chassisteil 3 derart miteinander verbunden sind, dass das als Wippe ausgestaltete hintere Chassisteil 3 gegenüber dem vorderen Chassisteil 2 drehbar ist.

Fig. 3b zeigt die perspektivische Ansicht des unteren Teils des Chassis 23, auf das die oben genannte Basisstruktur aufsetzbar ist, die in der gezeigten Ausgestaltung drei mit den Chassisarmen 20, 20' des vorderen Chassisteils 2 verbundene Querstreben 25, 26, 27 und zwei Ausleger 271, 271' umfasst, die von der dritten Querstrebe 27 gehalten sind und die das hintere Chassisteil 2 überragen.

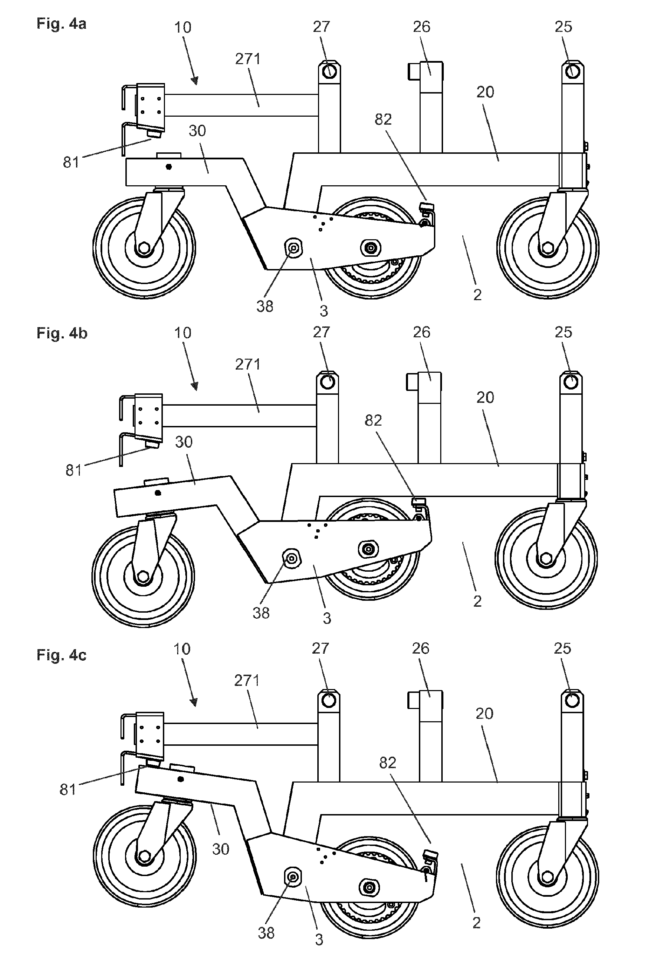

Die Figuren 4a, 4b und 4c zeigen das Fahrwerk 10 mit drei unterschiedlichen Positionen bzw. Drehlagen des als Wippe ausgestalteten hinteren Chassisteils 3. Fig. 4a zeigt das Fahrwerk 10 mit dem waagrecht ausgerichteten hinteren Chassisteil 3. Fig. 4b zeigt das Fahrwerk 10 mit dem frontseitig nach oben bis zu einem ersten Endanschlag gegen das vordere Chassisteil 2 gedrehten hinteren Chassisteil 3. Der erste Endanschlag wird durch die Tragarme 20, 20' des vorderen Chassisteil 2 gebildet. Fig. 4c zeigt das Fahrwerk 10 mit dem hinteren Chassisteil 3, das rückseitig nach oben bis zu einem zweiten Endanschlag gegen die rückwärts gewandten Ausleger 271, 271' des vorderen Chassisteils 2 gedreht wurde. Damit das Erreichen des ersten und des zweiten Endanschlags geräuschlos erfolgt, sind die entsprechenden Chassisteile mit Dämpfungselementen 81, 82 versehen.

Durch diese Ausgestaltung des Fahrwerks 10 wird auch bei nicht ebenem Fahrbahnuntergrund oder beispielsweise beim Übergang zu einer Rampe der Kontakt insbesondere der mittleren Räder 32, 32' mit der Fahrbahn gewährleistet. Damit bleibt auch eine permanente Bremsmöglichkeit bzw. Bremswirkung sowie eine Antriebsmöglichkeit bzw. Antriebswirkung allein über die mittleren Räder 32 erhalten und es besteht nicht die Gefahr, dass sich der Transportwagen 1 ungewollt selbständig oder unkontrolliert bewegt. Aufgrund des permanenten Kontaktierens des Fahrbahnuntergrunds ist der Transportwagen 1 zudem stabil gehalten und kann weder vorwärts auch seitlich kippen.

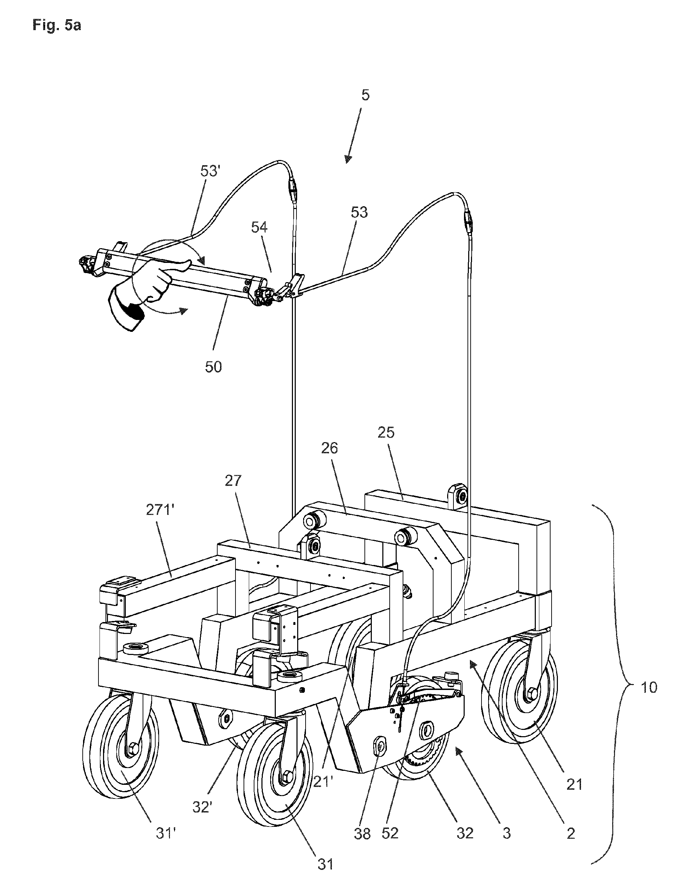

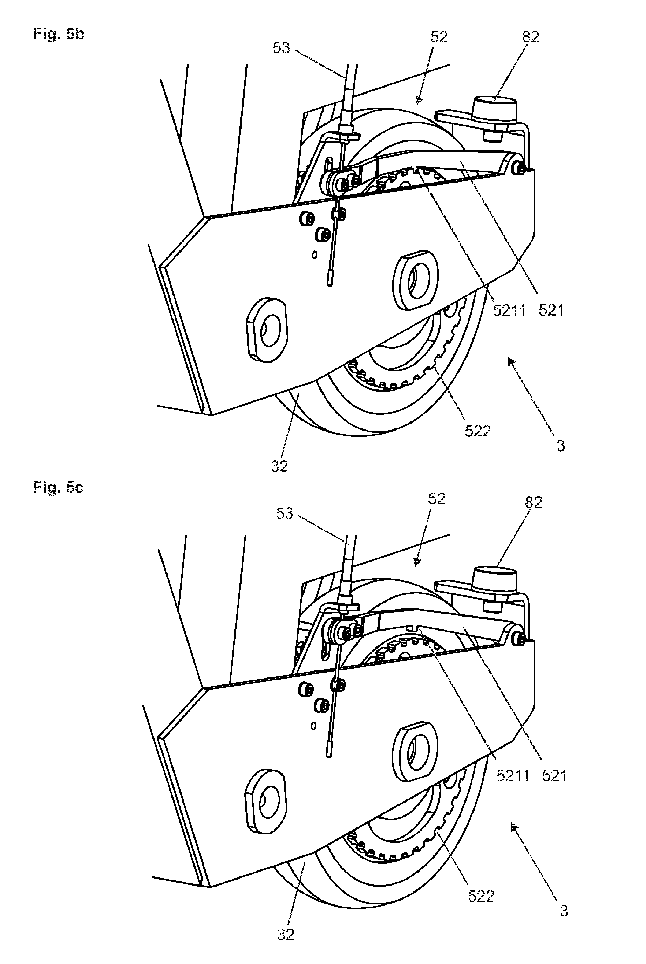

Fig. 5a zeigt die am Abschlussrahmen 14 angeordnete Griffstange 50, die einen ovalen Querschnitt aufweist und schwenkbar in den Schenkeln des Abschlussrahmens 14 gelagert ist. Die Schwenkachse der Griffstange 50 ist über Bremsleitungen 53, 53' mit Bremseinrichtungen 52 gekoppelt, welche in der neutralen Ausgangsstellung der Griffstange 50 die mit je mit einer der Bremseinrichtungen 52 verbundenen mittleren Räder 32, 32' des Transportwagens 1 blockieren können, wie dies in den Figuren 5b und 5c gezeigt ist.

Diese Blockierung oder Bremswirkung wird aufgehoben, wenn die Griffstange 50 in Pfeilrichtung verdreht wird, vorteilhaft in beide Richtungen. Damit erfolgt die Bedienung des Transportwagens 1 für den Benutzer einfach sowohl beim Ziehen wie beim Stossen des Transportwagens 1 durch leichte Verdrehen der Griffstange 50. Wenn die Griffstange 50 losgelassen wird, kehrt sie beispielsweise unter Federwirkung in die Ausgangsstellung zurück, wodurch der Transportwagen 1 gebremst und blockiert wird. Durch eine vorzugsweise vorgesehene Arretiervorrichtung 54 kann die Griffstange 50 auch blockiert werden.

Fig. 5b zeigt eine der Bremseinrichtungen 52 von Fig. 5a, die einen von der Bremsleitung 53 betätigbaren Bremshebel 521 umfasst, der ein zahnförmiges Arretierelement 5211 aufweist, das in ein Zahnrad 522 eingreift, welches mit dem mittleren Rad 32 verbunden ist.

Fig. 5c zeigt die Bremseinrichtung 52 von Fig. 5b mit dem aus dem Zahnrad 522 gelösten Arretierelement 5211.

Fig. 6 zeigt den vorzugsweise ausgestalteten Transportwagen 1 von Fig. 1 mit einer im Chassis 23 oder im Fahrwerk 10 eingebauten optischen Richtungsanzeige 7. Die Richtungsanzeige 7 besteht beispielsweise aus einem Lichtsender, der einen in Fahrtrichtung F zum Boden hin gerichteten Lichtfächer 71 ausstrahlt. Dieser Lichtfächer 71 zeichnet auf dem Boden eine optisch sichtbare Linie auf, die den Verlauf des künftigen Weges (bei Geradeausfahrt) des Transportwagens 1 anzeigt. Damit ist für die Bedienperson des Transportwagens 1 auch bei stossendem Betrieb möglich, einfach zu sehen, ob der Fahrweg des Transportwagens 1 frei von Hindernissen ist oder nicht.

Fig. 7a zeigt die Unterseite des entlang der Längsachse L fahrenden Transportwagens 1 von Fig. 2 mit den Radachsen 210, 210'; 310, 310'; 320, 320', aller Räder 21, 21', 31, 31', 32, 32' parallel zueinander und parallel zur Querachse Q des Laufwerks 10 ausgerichtet.

Fig. 7b zeigt die Unterseite des sich um einen Wendepunkt W um dessen zentrale Hochachse drehenden Transportwagens 1 von Fig. 2 mit den Radachsen 210, 210'; 310, 310'; 320, 320', aller er 21, 21', 31, 31', 32, 32' radial zum Wendepunkt W und der gemeinsamen Radachse 320 der Räder 32, 32' des mittleren Räderpaars noch immer parallel zur Querachse Q des Laufwerks 10 ausgerichtet. Die um deren Hochachse drehbaren Räder 21, 21'; 31, 31' des vorderen und des hinteren Räderpaars wurden automatisch ausgelenkt und laufen entlang einem äusseren Kreis k2 um den Wendepunkt W. Die um deren Hochachse nicht schwenkbaren Räder 32, 32' des mittleren Räderpaars sind unverändert ausgerichtet und laufen entlang einem inneren Kreis k1 konzentrisch zum äusseren Kreis k2 um den Wendepunkt W. Es ist mit Pfeilen illustriert, dass die Räder 32, 32' des mittleren Räderpaars bei diesem Wendevorgang mit unterschiedlichem Richtungssinn drehen.

Die mittig angeordneten Räder 32, 32' des mittleren Räderpaars können fest an der Wippe bzw. am hinteren Chassisteil 3 angeordnet sein und weisen beim Drehen um die zentrale Hochachse H somit entgegengesetzte Drehrichtungen auf. Wenn die Räder 32 gebremst sind, wird damit nicht nur die Längsbewegung des Transportwagens 1 gehemmt sondern auch eine Drehbewegung des Transportwagens 1 um seine Hochachse H verhindert. Da die Räder 32 fest und nicht schwenkbar an der Wippe 3 angeordnet sind, kann eine einfache Bremsmechanik eingesetzt werden, welche sich an der Wippe 3 resp. am Chassis 23 abstützt.

Ausgehend von den Figuren 7a und 7b und unter Berücksichtigung der Tatsache, dass die Räder 32, 32' des mittleren Räderpaars aufgrund der Funktion der Wippe 3 stets in gutem Kontakt mit der Fahrbahnunterlage sind, wird erkennbar, dass durch den motorischen Antrieb dieser Räder 32, 32' der Transportwagen 1 vorteilhaft verfahren und gedreht werden kann. In einer vorzugsweisen Ausgestaltung kann der Transportwagen 1 daher besonders vorteilhaft mit Antriebsvorrichtungen versehen und entsprechend gesteuert werden.

Fig. 8a zeigt die Unterseite Transportwagens 1 in einer vorzugsweisen Ausgestaltung mit einer mit den Rädern 32, 32' des mittleren Räderpaars gekoppelten Antriebsvorrichtung 6, die von der vorzugsweise innerhalb des Chassis 23 angeordneten Energieversorgungsvorrichtung 600 gespeist wird und mittels einer symbolisch gezeigten Steuereinheit 60 steuerbar ist. Mittels der Antriebsvorrichtung 6 können die Räder 32, 32' gemeinsam oder individuell angetrieben werden, um Bewegungen und Manöver auszuführen, wie sie in den Figuren 7a und 7b gezeigt sind

Fig. 8b zeigt die Unterseite des Transportwagens 1 von Fig. 8a mit zwei Antriebsvorrichtungen 6, 6', mittels denen die Räder 32, 32' des mittleren Räderpaars individuell angetrieben werden können. Diese Ausgestaltung ist besonders vorteilhaft, da kleine, aber sehr kräftige elektrische Motoren, die mit einem entsprechenden Getriebe ausgerüstet sind, auf dem Markt erhältlich sind.

Da die Räder 32, 32' des mittleren Räderpaars nicht schwenkbar, sondern mit ihrer gemeinsamen Radachse 320 stets parallel und ortsfest zur Querachse Q des Chassis 23 ausgerichtet sind, können die Motoren besonders einfach mit dem Chassis 23 verbunden und mit den Rädern 32, 32' des mittleren Räderpaars gekoppelt werden.

Fig. 9a zeigt den Transportwagen 1 von Fig. 1 mit der Tragstruktur 100, in die Warenkörbe 911, ..., 923' eingehängt und Behälter 93 und/oder Maschinen 94 (siehe auch Fig. 9c) eingesetzt sind. Es ist ersichtlich, dass die zu verkaufenden Produkte in den Warenkörben 911, ..., 923' gut geordnet und leicht zugänglich deponiert werden können. Einerseits wird der Raum der Tragstruktur 100 optimal genutzt. Anderseits werden die Waren den potentiellen Käufern optimal präsentiert, so dass Verkaufsgespräche ein Minimum an Zeit in Anspruch nehmen werden. In den grösseren Warenkörben 911, ..., 913 werden beispielsweise grössere Esswaren gelagert, während in den kleineren Warenkörben 921, ..., 923' Süssigkeiten gelagert werden können. Auf die Stellplatte 12 kann beispielsweise eine Kaffeemaschine aufgesetzt werden, von der Flüssigkeit durch die Öffnung 931 in den Behälter 93 abgeführt werden kann (siehe Fig. 9c). Durch den Kanal 13 kann ein Anschlusskabel von der Energieversorgungsvorrichtung 600 im Chassis 23 zur Kaffeemaschine geführt werden. Durch die Vermeidung einer äusseren Rahmenstruktur wird einerseits der Schwerpunkt der Tragvorrichtung 100 vorteilhaft in das Zentrum des Transportwagens 1 verschoben. Zudem wird der Zugriff auf die Waren durch keine äussere Rahmenstruktur behindert, weshalb das Beladen und Entladen des Transportwagens 1 besonders einfach ist.

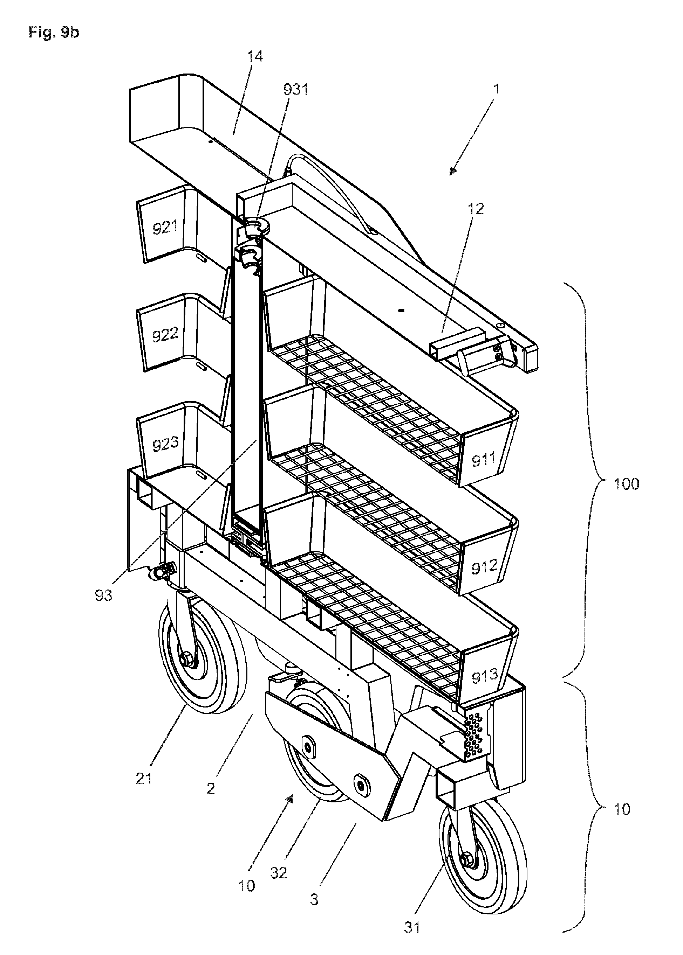

Fig. 9b zeigt einen Schnitt durch den Transportwagen 1 entlang der in Fig. 9a eingezeichneten Schnittlinie A-A. Der Schnitt verläuft durch die Öffnung 931 und durch den Behälter 93, der leicht entnommen und entleert werden kann. Diese Darstellung zeigt den besonders vorteilhaften Aufbau der zentralisierten Tragstruktur 100, in die der genannte Behälter 93 und weitere hilfreiche Elemente vorteilhaft und Raum sparend integriert werden können.

Fig. 9c zeigt einen Schnitt durch den Transportwagen 1 entlang der in Fig. 9a eingezeichneten Schnittlinie B-B. In dieser Darstellung ist der Aufbau der Tragstruktur 100 mit den tragenden Längsrippen 18, 19 und den ordnenden Seitenrippen gut sichtbar. Die beiden Längsrippen 18, 19 könnten eine Einheit bilden oder sind durch eine Ummantelung zu einem Verbundmodul derart zusammengefasst, dass dazwischen der Kanal 13 offen gehalten wird, welcher die Tragstruktur 100 durchläuft. Der Flüssigkeitsbehälter 93 und ein Behälter oder eine Maschine 94 wurden seitlich herausgezogen. Die Tragstruktur 100 nimmt wenig Raum in Anspruch, erlaubt es aber, die Warenkörbe sicher zu halten und den zur Verfügung stehenden Raum vorteilhaft zu unterteilen und zu nutzen.

Der erfindungsgemässe Transportwagen 1 eignet sich insbesondere für den Einsatz in Zugwaggons, in welchen häufig nur schmale freie Gänge zwischen den Sitzreihen für den Einsatz eines Transportwagens 1 zur Verfügung stehen, und bei welchen häufig in der Verbindung zwischen aufeinanderfolgenden Wagen Rampen zu überwinden sind. Das stabile Fahrwerk 10 ermöglicht es, eine autonome Energieversorgung für elektrische Geräte wie insbesondere Kaffeemaschinen mitzuführen, ohne dass durch das damit bedingte Gewicht die Manövrierbarkeit oder Stabilität des Transportwagens 1 beeinträchtigt wird. Durch die Anordnung der Tragstruktur 100 in der Mitte des Transportwagens 1 kann zudem das mitgeführte Warensortiment gut sichtbar präsentiert werden und durch die leichte Drehbarkeit um die Hochachse besteht auch ein guter Zugriff auf den Seitenbereich des Transportwagens 1 von vorne oder von hinten auch bei sehr engen Platzverhältnissen.

Selbstverständlich lässt sich der Transportwagen 1 aber auch für anderen Einsatzzwecke, insbesondere, aber nicht ausschliesslich, mit beschränkten Platz- oder Manövrierverhältnissen sehr gut einsetzen.

Der erfindungsgemässe Transportwagen kann auch zum Tragen hoher Lasten eingesetzt werden, wobei vorzugsweise zusätzliche vordere Räder und/oder zusätzliche hintere Räder und/oder zusätzliche mittlere Räder eingesetzt werden, die einen Anteil der Last übernehmen.

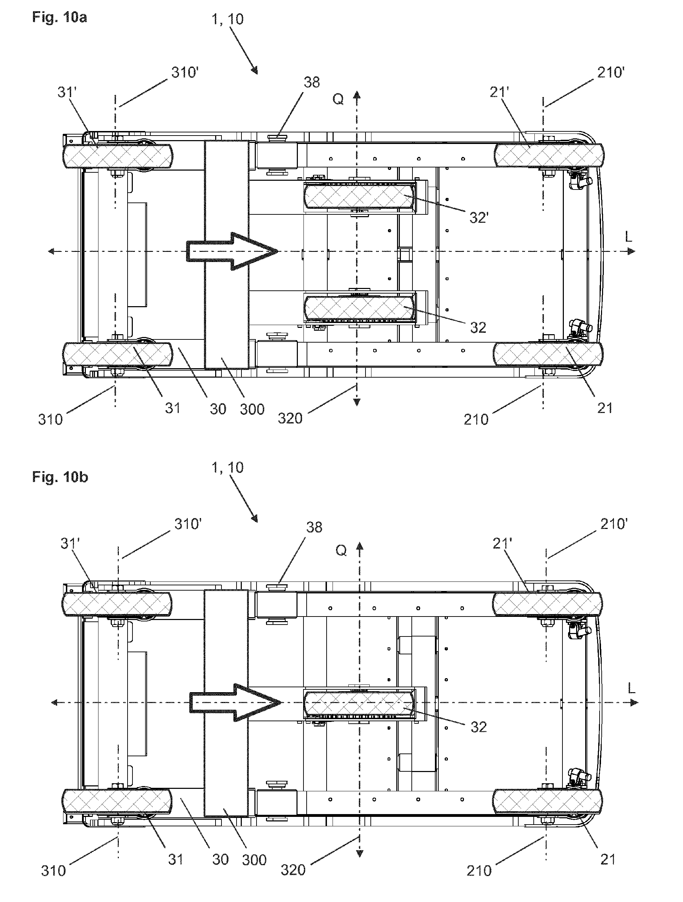

Fig. 10a zeigt die Unterseite des Transportwagens von Fig. 7a mit gegeneinander verschobenen mittleren Rädern 32, 32', die an den Längsseiten des Transportwagens 1 somit nicht störend in Erscheinung treten können.

Fig. 10b zeigt die Unterseite des Transportwagens 1 von Fig. 7a mit nur einem mittleren Rad 32, welches in der Mitte des Transportwagens 1 angeordnet ist. Mit dieser Lösung kann der erfindungsgemässe Erfolg mit Einschränkungen erzielt werden. Sofern das mittlere Rad 32 mit einer Antriebs- oder Bremsvorrichtung verbunden ist, können damit nur der Bremsvorgang sowie der Antrieb vorwärts und rückwärts, nicht aber die Drehung des Transportwagens 1 automatisch gesteuert werden.

In den Ausgestaltungen von Fig. 10a und Fig. 10b sind die Chassisarme 30, 30' durch eine parallel zur Querachse Q des Transportwagens 1 verlaufende Traverse 300 miteinander verbunden, an der die beiden mittleren Räder 32, 32' gegeneinander verschoben bzw. das einzelne mittlere Rad 32 zentral angeordnet sind.

## Patentansprüche

1. Transportwagen (1) mit einem Fahrwerk (10), das ein Chassis (23) mit einer Längsachse (L) und einer dazu senkrecht verlaufenden Querachse (Q) aufweist, mit einer auf dem Fahrwerk (10) angeordneten Tragstruktur (100) zur Aufnahme und zum Halten von zu transportierenden Gegenständen und vorzugsweise mit einer der Steuerung des Fahrwerks (10) dienenden Bedienvorrichtung (50,60) und/oder einer Bremseinrichtung (52), **dadurch gekennzeichnet, dass** das Chassis (23) ein vorderes Chassisteil (2) umfasst, das wenigstens ein vorderes Rad oder zwei vordere Räder (21,21') eines vorderen Räderpaars je um deren Hochachse drehbar hält und das durch wenigstens ein Gelenk (38,38') mit einem als Wippe ausgebildeten hinteren Chassisteil (3) verbunden ist, das wenigstens ein hinteres Rad (31,31') oder zwei hintere Räder (31,31') eines hinteren Räderpaars je um deren Hochachse drehbar hält, und das zwischen den vorderen Rädern (21,21') und den hinteren Rädern (31,31') wenigstens ein mittleres Rad (32), vorzugsweise Räder (32, 32') eines mittleren Räderpaars, je um deren Hochachse drehfest hält.

2. Transportwagen (1) nach Anspruch 1, **dadurch gekennzeichnet, dass** die Räder (31,31';32,32';21,21') des vorderen Räderpaars (21,21'), des mittleren Räderpaars (32, 32') und des hinteren Räderpaars (31, 31') in Querachse des Chassis (23) mit einer Spurweite voneinander beabstandet sind, die vorzugsweise annähernd der Breite des Chassis (23) entspricht.

3. Transportwagen (1) nach Anspruch 2, **dadurch gekennzeichnet, dass** das hintere Chassisteil (3) eine einheitliche Wippe bildet oder dass das hintere Chassisteil (3) zwei gegeneinander drehbare Wippenteile aufweist, mit einem ersten Wippenteil, welches die ersten Räder (31,32) des hinteren Räderpaars (31, 32') und des mittleren Räderpaars (32, 32') hält, und mit einem zweiten Wippenteil, welches die zweiten Räder (31', 32') des hinteren Räderpaars (31, 32') und des mittleren Räderpaars (32, 32') hält.

4. Transportwagen (1) nach einem der Ansprüche 1 - 3, **dadurch gekennzeichnet, dass** das vordere Chassisteil (2) und das hintere Chassisteil (3) bis zu einem ersten und einem zweiten Endanschlag gegeneinander drehbar sind, an denen je wenigstens ein Dämpfungselement (81,82) vorgesehen ist und/oder dass das vordere Chassisteil (2) und das hintere Chassisteil (3) durch ein Dämpfungselement, wie einen pneumatischen oder hydraulischen Dämpfer, miteinander verbunden sind.

5. Transportwagen (1) nach Anspruch 4, **dadurch gekennzeichnet, dass** das vordere Chassisteil (3) und/oder das hintere Chassisteil (3) als Rahmen ausgebildet sind und um eine Achse (380) gegeneinander drehbar sind, die parallel zur Querachse (Q) des Chassis (23) verläuft.

6. Transportwagen (1) nach einem der Ansprüche 1 - 5, **dadurch gekennzeichnet, dass** wenigstens eines der mittleren Räder (32, 32') des mittleren Räderpaars mit der Bremseinrichtung (52) und/oder einer elektrischen Antriebsvorrichtung (6, 6') verbunden ist.

7. Transportwagen (1) nach einem der Anspruch 6, **dadurch gekennzeichnet, dass** die elektrische Antriebsvorrichtung (6) oder die elektrischen Antriebsvorrichtungen (6, 6') derart steuerbar ist oder sind, dass die mittleren Räder (32, 32') gemeinsam oder individuell vorzugsweise derart antreibbar oder bremsbar sind, dass der Transportwagen (1) durch elektrische Signale steuerbar ist, wobei die mittleren Räder (32, 32') vorzugsweise mit gleicher oder unterschiedlicher Drehrichtung und gleicher oder unterschiedlicher Drehgeschwindigkeit betreibbar sind.

8. Transportwagen (1) nach Anspruch 6 oder 7, **dadurch gekennzeichnet, dass** die Bedienvorrichtung (50,60) eine Betätigungsvorrichtung für die Bremseinrichtung (52) vorzugsweise in Form einer drehbar angeordneten Griffstange (50) und/oder eine elektrische Steuervorrichtung (60) umfasst, die drahtlos oder drahtgebunden mit der elektrische Antriebsvorrichtung (6) oder den elektrischen Antriebsvorrichtungen (6, 6') verbunden ist, um diese zu steuern.

9. Transportwagen (1) nach einem der Ansprüche 1 - 8, **dadurch gekennzeichnet, dass** die Tragstruktur (100) mehrere senkrecht zum Laufwerk (10) ausgerichtete und gegebenenfalls von einer Stütze gehaltene Rippen (11,11',18,19) aufweist, durch die mehrere Tragbereiche voneinander getrennt werden, in die Haltevorrichtungen, wie Regale, Warenkörbe und Flüssigkeitsbehälter, oder Maschinen, wie Heizvorrichtungen und Getränkemaschinen, einsetzbar sind.

10. Transportwagen (1) nach Anspruch 9, **dadurch gekennzeichnet, dass** die Rippen (11,11',18,19') der Tragstruktur aus flächigen Elementen gebildet sind und dass innerhalb oder zwischen den Rippen (11,11',18,19') oder innerhalb der Stütze ein gegebenenfalls der Aufnahme elektrischer oder mechanischer Leitungen dienender Kanal (13) vorzugsweise vertikal durch die Tragstruktur (100) verläuft, auf deren Oberseite vorzugsweise eine annähernd parallel zum Chassis (23) verlaufende Stellplatte (12) angeordnet ist.

11. Transportwagen (1) nach Anspruch 9 oder 10, **dadurch gekennzeichnet, dass** wenigstens einen Teil der Tragstruktur nach aussen abschliessende oder abdeckende, vorzugsweise beweglich angeordnete Abdeckungselemente angeordnet sind.

12. Transportwagen (1) nach einem der Ansprüche 1 - 11, **dadurch gekennzeichnet, dass** im Chassis (23) eine Energieversorgungseinrichtung (600) angeordnet ist.

13. Transportwagen (1) nach einem der Ansprüche 1 - 12, **dadurch gekennzeichnet, dass** das Fahrwerk (10) mit einem Richtungsweiser (7), vorzugsweise einem Laserlichtsender verbunden ist, der zur Abgabe optischer Signale (71) parallel zur Längsachse (L) dient.

14. Transportwagen (1) nach einem der Ansprüche 1 - 13, **dadurch gekennzeichnet, dass** wenigstens ein Teil der Räder oder Räderpaare (31,31';32,32';21,21') durch eine Federung mit dem Chassis (23) verbunden ist und/oder dass die Tragstruktur (100) durch elastische Elemente, gegebenenfalls Federelemente, auf dem Fahrwerk (10) abgestützt ist.

15. Transportwagen (1) nach einem der Ansprüche 1 - 14, **dadurch gekennzeichnet, dass** der gegenseitige Abstand der mittleren Räder (32, 32') geringer ist als der gegenseitige Abstand vorderen Räder (21, 21') und der hinteren Räder (31, 31') oder dass nur ein mittleres Rad (32) vorzugsweise in der Mitte des Transportwagens (1) angeordnet ist.
